# EUROPÄISCHE PATENTSCHRIFT

(11) **EP 3 835 609 B1**
(45) Veröffentlichungstag und Bekanntmachung des Hinweises auf die Patenterteilung: **01.02.2023**
(21) Anmeldenummer: 20212454.1
(22) Anmeldetag: 08.12.2020
(51) Int. Cl.: F16D 23/06

(54) **SYNCHRONISATIONSVORRICHTUNG**
SYNCHRONISATION DEVICE
DISPOSITIF DE SYNCHRONISATION

(30) Priorität: 09.12.2019 DE 102019133595
(43) Veröffentlichungstag der Anmeldung: 16.06.2021
(73) Patentinhaber: HOERBIGER Antriebstechnik Holding GmbH, 86956 Schongau (DE)
(72) Erfinder: Echtler, Peter, 86956 Schongau (DE); Back, Ottmar, 86956 Schongau (DE)
(74) Vertreter: Prinz & Partner mbB

(56) Entgegenhaltungen:
- DE-A1-102005 061 481
- DE-A1-102007 051 741
- JP-U- H0 661 340
- KR-A- 20020 038 362

## Beschreibung

Die Erfindung betrifft eine Synchronisationsvorrichtung für ein Schaltgetriebe eines Kraftfahrzeugs.

Aus dem Stand der Technik sind Synchronisationsvorrichtungen für Kraftfahrzeugschaltgetriebe bekannt, die eine Schiebemuffe umfassen, in die eine Schaltgabel eingreift, um die Schiebemuffe aus ihrer Neutralstellung in eine jeweilige Schaltrichtung zu verstellen. Die Schiebemuffe wird dabei solange in die jeweilige Schaltrichtung verstellt, bis eine Welle, insbesondere Getriebewelle, formschlüssig mit einem entsprechenden Gangrad verbunden ist. Das Gangrad kann hierzu einen Kupplungskörper umfassen, welcher in der synchronisierten Stellung mit der Welle drehfest gekoppelt ist.

Das Ende des Schaltvorgangs ist dabei durch einen mechanischen Anschlag definiert, der bei klassischen Synchronisationsvorrichtungen durch das Gangrad selbst, durch ein Einlegestück, das der Schiebemuffe zugeordnet ist, durch eine separat ausgebildete Anschlagscheibe oder durch eine entsprechend ausgebildete Schiebemuffe ausgebildet ist. Um den mechanischen Anschlag zu realisieren ist demnach ein entsprechend hoher zusätzlicher Aufwand notwendig, der mit höheren Kosten, einem erhöhten Bauraumbedarf und/oder Einschränkungen in der Gestaltung der Schiebemuffe, einer Nabe bzw. Synchronringen einhergeht.

Aus der DE 10 2007 051 741 A1 ist eine Schiebemuffe bekannt, zum Schalten von Gangstufen eines Schaltgetriebes mit mindestens einem Gangrad mit Kupplungsverzahnung, wobei die Schiebemuffe aus einer neutralen Stellung in Richtung des Gangrades verschiebbar ist. Die Schiebemuffe weist eine Innenverzahnung zum Eingriff mit der Kupplungsverzahnung des Gangrades auf und hat einen oder mehrere Anschläge zur Begrenzung der axialen Verschiebbarkeit, die jeweils zwischen zwei benachbarten Zähnen der Innenverzahnung der Schiebemuffe angeordnet ist/sind und gegen die Kupplungsverzahnung des Gangrades anstößt. Jeder Anschlag weist zwei sich in Richtung zur Kupplungsverzahnung hin erweiternde, gegenüberliegend angeordnete Anlageflächen auf.

Daneben zeigt die DE 10 2005 061 481 A1 eine Schiebemuff mit Zähnen, wobei mehrere Zähne durch einen Anschlag miteinander verbunden sind. Im Anschlagsind Zahnzwischenräume, in die im geschalteten Zustand die Kupplungszähne eingreifen.

Außerdem zeigt die JP H06 61340 U eine Verzahnung eines Getriebes, wobei die Verzahnung an den Zahnflanken Anschlagsflächen aufweist.

Die KR 2002 0038362 A offenbart eine Synchronisiereinrichtung für ein Schaltgetriebe mit einer Schiebemuffe und einem Kupplungszahnrad, wobei die Zähne der Schiebemuffe eine vereinfachte Geometrie aufweisen, um das Schaltgefühl zu verbessern.

Die Aufgabe der Erfindung ist es, eine Synchronisationsvorrichtung bereitzustellen, die einen mechanischen Anschlag für die Schiebemuffe in einfacher und kostengünstiger Weise zur Verfügung stellt.

Die Aufgabe wird erfindungsgemäß gelöst durch eine Synchronisationsvorrichtung für ein Schaltgetriebe eines Kraftfahrzeugs, die eine Schiebemuffe und wenigstens einen Kupplungskörper umfasst. Die Schiebemuffe weist eine Innenverzahnung mit einer Vielzahl von Schiebemuffenzähnen und dazwischenliegenden Schiebemuffenzahnlücken auf. Der Kupplungskörper weist eine Außenverzahnung mit einer Vielzahl von Kupplungszähnen und dazwischenliegenden Kupplungszahnlücken auf. Die Schiebemuffe und der Kupplungskörper sind in axialer Schieberichtung relativ zueinander verstellbar. In einer synchronisierten Stellung der Synchronisationsvorrichtung liegen die Schiebemuffenzähne zumindest teilweise in den Kupplungszahnlücken und die Kupplungszähne zumindest teilweise in den Schiebemuffenzahnlücken. Zudem weisen zwei benachbarte Schiebemuffenzähne jeweils einen Anlageabschnitt auf, die beide einem speziellen Kupplungszahn zugeordnet sind. Dieser spezielle Kupplungszahn zwei Anschlagsabschnitte auf, die an entgegengesetzten Seiten des speziellen Kupplungszahns vorgesehen sind. Alternativ oder ergänzend weisen zwei benachbarte Kupplungszähne jeweils einen Anschlagsabschnitt auf, die beide einem speziellen Schiebemuffenzahn zugeordnet sind. Dieser spezielle Schiebemuffenzahn weist zwei Anlageabschnitte auf, die an entgegengesetzten Seiten des speziellen Schiebemuffenzahns vorgesehen sind. In jedem Fall liegen die beiden Anschlagsabschnitte in der synchronisierten Stellung an den beiden Anschlagsabschnitten an, wodurch ein mechanischer Schaltanschlag in der axialen Schieberichtung ausgebildet ist, der eine weitere Bewegung in die axiale Schieberichtung über die synchronisierte Stellung hinaus verhindert. Dabei sind bzw. ist der spezielle Kupplungszahn gegenüber den übrigen Kupplungszähnen und/oder der spezielle Schiebemuffenzahn gegenüber den übrigen Schiebemuffenzähnen in axialer Schieberichtung gesehen verkürzt.

Der Grundgedanke der Erfindung ist es, den mechanischen Schaltanschlag für die Schiebemuffe, auch mechanischer Schiebemuffenanschlag genannt, in die Verzahnung des Kupplungskörpers zu integrieren. Hierdurch lässt sich der mechanische Anschlag in dem vorhandenen Bauraum umsetzten, was auch als bauraumneutral bezeichnet wird, da der mechanische Schaltanschlag keinen zusätzlichen Bauraum benötigt. Darüber hinaus müssen die weiteren Komponenten der Synchronisationsvorrichtung geometrisch nicht geändert werden, was den Aufwand bei der Herstellung entsprechend verringert und somit die Herstellungs- und Fertigungskosten reduziert.

Die Anschlagsabschnitte, die mit den Anlageabschnitten zusammenwirken, stellen demnach den axialen Endanschlag für die Schiebemuffe dar, also einen Endanschlag in axialer Schieberichtung. Die Schiebemuffe, die über eine Schaltgabel aus ihrer Neutralstellung in eine jeweilige Schaltrichtung bewegt wird, kann demnach nicht über die synchronisierte Stellung hinausbewegt werden. Die relative Bewegung zwischen der Schiebemuffe und dem Kupplungskörper in axialer Schieberichtung erfolgt über die Betätigung der Schiebemuffe mittels der Schaltgabel, da die Schaltgabel die Schiebemuffe in der axialen Schieberichtung verstellt, sodass die Schiebemuffe über ihre Innenverzahnung mit der Außenverzahnung des Kupplungskörpers zusammenwirkt.

Der Kupplungskörper kann eine separat ausgebildete Kupplungsscheibe sein, die mit dem zu synchronisierenden Gangrad wiederum zusammenwirkt. Auch kann der Kupplungskörper als Teil des Gangrads ausgebildet sein, welches über die Schiebemuffe mit einer zugeordneten Welle entsprechend synchronisiert wird, insbesondere einer von der Antriebseinheit ausgehenden Getriebewelle, beispielsweise die vom Verbrennungsmotor ausgehende Welle.

Es können auch mehrere Schiebemuffenzähne wenigstens einen Anlageabschnitt aufweisen. Insbesondere weisen sämtliche Schiebemuffenzähne wenigstens einen entsprechenden Anlageabschnitt auf. Sämtliche Schiebemuffenzähne können zwei Anlageabschnitte aufweisen, beispielsweise wenn der Kupplungskörper den speziellen Kupplungszahn aufweist.

Ferner können mehrere Kupplungszähne einen entsprechenden Anschlagsabschnitt aufweisen. Insbesondere weisen sämtliche Kupplungszähne einen entsprechenden Anschlagsabschnitt auf. Sämtliche Kupplungszähne können zwei Anschlagsabschnitte aufweisen, beispielsweise wenn die Schiebemuffe den speziellen Schiebemuffenzahn aufweist

Es kann nur ein spezieller Schiebemuffenzahn mit zwei Anlageabschnitten an entgegengesetzten Seiten und/oder nur ein spezieller Kupplungszahn mit zwei Anschlagsabschnitten an entgegengesetzten Seiten vorgesehen sein.

Auch kann vorgesehen sein, dass mehrere spezielle Schiebemuffenzähne und/oder mehrere spezielle Kupplungszähne vorgesehen sind, beispielsweise drei Zähne, die jeweils um 120° versetzt zueinander angeordnet sind.

Der spezielle Schiebemuffenzahn wirkt dabei mit zwei benachbarten Kupplungszähnen zusammen, die jeweils zumindest einen Anschlagsabschnitt aufweisen. Ebenso wirkt der spezielle Kupplungszahn mit zwei benachbarten Schiebemuffenzähnen zusammen, die jeweils zumindest einen Anlageabschnitt aufweisen.

Es ist ebenso möglich, dass die zwei benachbarten Schiebemuffenzähne besonders ausgebildet sind, insbesondere zumindest abschnittsweise breiter. Die beiden benachbarten Schiebemuffenzähne können mit dem speziellen Kupplungszahn zusammenwirken, insbesondere über ihren verbreiterten Abschnitt.

Der spezielle Schiebemuffenzahn, also der mit den zwei Anlageabschnitten an entgegengesetzten Seiten, kann gegenüber den anderen Schiebemuffenzähnen in axialer Schieberichtung gesehen verkürzt ausgebildet.

Ebenso kann der spezielle Kupplungszahn, also der mit den zwei Anschlagsabschnitten an entgegengesetzten Seiten, gegenüber den anderen Kupplungszähnen in axialer Schieberichtung gesehen verkürzt ausgebildet sein.

Ein nicht erfindungsgemäßes Beispiel sieht vor, dass der mechanische Schaltanschlag für die Schiebemuffe durch den Kupplungskörper ausgebildet ist. Insofern sind keine weiteren Bauteile der Synchronisationsvorrichtung benötigt, um den Endanschlag für die Schiebemuffe bereitzustellen, da der mechanische Schaltanschlag in dem ohnehin benötigten Kupplungskörper integriert ist, insbesondere in der Außenverzahnung des Kupplungskörpers, da zumindest einer der Kupplungszähne den entsprechenden Anschlagsabschnitt aufweist, der mit dem Anlageabschnitt des zugeordneten Schiebemuffenzahns zusammenwirkt.

Ferner kann der spezielle Schiebemuffenzahn in Richtung des Kupplungskörpers, insbesondere spitz, zulaufend ausgebildet sein und/oder der spezielle Kupplungszahn in Richtung der Schiebemuffe, insbesondere spitz, zulaufend ausgebildet sein. Der zulaufende Schiebemuffenzahn/Kupplungszahn stellt sicher, dass sich die Schiebemuffe und der Kupplungskörper über ihre jeweiligen Verzahnungen in einfacher Weise ineinander fahren lassen.

Der spezielle Kupplungszahn kann einen stumpfen Endabschnitt haben, der zur Schiebemuffe weist und im Wesentlichen senkrecht zur axialen Schieberichtung orientiert ist. Insofern muss der spezielle Kupplungszahn keine Spitze aufweisen, sondern kann abgeflacht ausgebildet sein.

Der spezielle Schiebemuffenzahn kann einen stumpfen Endabschnitt haben, der zum Kupplungskörper weist und im Wesentlichen senkrecht zur axialen Schieberichtung orientiert ist. Der spezielle Schiebemuffenzahn muss keine Spitze aufweisen, sondern kann entsprechend abgeflacht ausgebildet sein.

Der spezielle Kupplungszahn und/oder der spezielle Schiebemuffenzahn können jeweils bzw. kann einen Basisabschnitt aufweisen, der an dem zur Spitze bzw. zum Endabschnitt entgegengesetzten Ende vorgesehen ist.

Der Basisabschnitt kann für den speziellen Kupplungszahn und/oder den speziellen Schiebemuffenzahn breiter sein als für die übrigen Kupplungszähne bzw. Schiebemuffenzähne. Die Breite definiert sich hier in einer zur axialen Schieberichtung senkrechten Richtung, insbesondere entlang des Umfangs des Kupplungskörpers bzw. der Schiebemuffe.

Eine bevorzugte Ausführungsform sieht vor, dass die Anlageabschnitte und/oder die Anschlagsabschnitte in Bezug auf die axiale Schieberichtung schräg verlaufend ausgebildet sind. Hierbei kann ein Winkel zwischen 20° und 70° zur axialen Schieberichtung vorgesehen sein, beispielsweise ein Winkel von 45°. Aufgrund der schräg verlaufenden Abschnitte in Bezug auf die axiale Schieberichtung ist sichergestellt, dass die Schiebemuffe mit dem Kupplungskörper, insbesondere über die jeweiligen Verzahnungen, in einfacher Weise synchronisiert werden kann, da die Innenverzahnung der Schiebemuffe in die Außenverzahnung des Kupplungskörpers eingefahren werden kann, wenn die Schiebemuffe in der axialen Schieberichtung verstellt wird. Des Weiteren ist über die entsprechend schräge Ausbildung der Abschnitte sichergestellt, dass der Kupplungskörper und die Schiebemuffe eine entsprechend große Anlagefläche haben, wodurch die bei der Drehung der Synchronisationsvorrichtung auftretenden Kräfte entsprechend gleichmäßig verteilt übertragen werden können.

Die Anschlagsabschnitte der benachbarten Kupplungszähne, die insbesondere dem speziellen Schiebemuffenzahn zugeordnet sind, sind an einander zugewandten Seiten der benachbarten Kupplungszähne vorgesehen, sodass sich die Anschlagsabschnitte gegenüberliegen. Mit anderen Worten wird der zugeordnete spezielle Schiebemuffenzahn an zwei entgegengesetzten Seiten von den beiden Anschlagsabschnitten der benachbarten Kupplungszähne kontaktiert, um den axialen Schaltanschlag auszubilden. Der spezielle Schiebemuffenzahn weist daher zwei Anlageabschnitte auf, die an entgegengesetzten Seiten vorgesehen sind.

Da die Anschlagsabschnitte der benachbarten Kupplungszähne jeweils schräg verlaufend in Bezug auf die axiale Schieberichtung sind, können die beiden Anschlagsabschnitte, in axialer Schieberichtung gesehen, aufeinander zulaufen, sodass sie einen sich verengenden Aufnahmebereich für den zugeordneten Schiebemuffenzahn ausbilden. Hierdurch ist gewährleistet, dass der zugeordnete spezielle Schiebemuffenzahn möglichst mittig zwischen den beiden Kupplungszähnen aufgenommen werden kann. Insbesondere findet aufgrund der aufeinander zulaufenden Anschlagsabschnitte eine Zentrierung des speziellen Schiebemuffenzahns beim Einfahren statt, sodass beispielsweise die Schiebemuffe in Bezug auf den Kupplungskörper ausgerichtet werden kann.

Mit anderen Worten sind die beiden benachbarten Kupplungszähne (im Wesentlichen) spiegelsymmetrisch zueinander ausgebildet, wobei die Symmetrieachse, in der synchronisierten Stellung, durch die Mittelachse des zugeordneten speziellen Schiebemuffenzahns und/oder durch die Mittelachse der beiden benachbarten Kupplungszähne definiert ist.

Grundsätzlich können alle Kupplungszähne identisch ausgebildet sein, sofern der spezielle Schiebemuffenzahn vorgesehen ist.

Alternativ oder ergänzend sind die Anlageabschnitte der benachbarten Schiebemuffenzähne, die insbesondere dem speziellen Kupplungszahn zugeordnet sind, an einander zugewandten Seiten der benachbarten Schiebemuffenzähne vorgesehen, sodass sich die Anlageabschnitte gegenüberliegen. Mit anderen Worten wird der zugeordnete spezielle Kupplungszahn an zwei entgegengesetzten Seiten von den beiden Anlageabschnitten der benachbarten Schiebemuffenzähne kontaktiert, um den axialen Schaltanschlag auszubilden. Der spezielle Kupplungszahn weist daher zwei Anschlagsabschnitte auf, die an entgegengesetzten Seiten vorgesehen sind.

Da die Anlageabschnitte der benachbarten Schiebemuffenzähne jeweils schräg verlaufend in Bezug auf die axiale Schieberichtung sind, können die beiden Anlageabschnitte, in axialer Schieberichtung gesehen, aufeinander zulaufen, sodass sie einen sich verengenden Aufnahmebereich für den zugeordneten speziellen Kupplungszahn ausbilden. Hierdurch ist gewährleistet, dass der zugeordnete spezielle Kupplungszahn möglichst mittig zwischen den beiden Schiebemuffenzähne aufgenommen werden kann. Insbesondere findet aufgrund der aufeinander zulaufenden Anlageabschnitte eine Zentrierung des speziellen Kupplungszahns beim Einfahren statt, sodass beispielsweise die Schiebemuffe in Bezug auf den Kupplungskörper ausgerichtet werden kann.

Mit anderen Worten sind die beiden benachbarten Schiebemuffenzähne (im Wesentlichen) spiegelsymmetrisch zueinander ausgebildet, wobei die Symmetrieachse, in der synchronisierten Stellung, durch die Mittelachse des zugeordneten speziellen Kupplungszahns und/oder durch die Mittelachse der beiden benachbarten Schiebemuffenzähne definiert ist.

Grundsätzlich können alle Schiebemuffenzähne identisch ausgebildet sein, sofern der spezielle Kupplungszahn vorgesehen ist.

Eine bevorzugte Ausführungsform sieht vor, dass ein in axialer Schieberichtung durchgehender Freiraum den beiden Anschlagsabschnitten zugeordnet ist. Dies bedeutet, dass die beiden Anschlagsabschnitte gerade nicht miteinander verbunden sind, da ein entsprechender Freiraum zwischen ihnen vorgesehen ist. Insofern sind die beiden Kupplungszähne separat voneinander bzw. getrennt voneinander ausgebildet.

Hierdurch ist es insbesondere möglich, dass der Kupplungskörper bei seiner Herstellung axial entformbar ist. Dies liegt daran, dass keine Hinterschnitte oder ähnliches vorliegen.

Insbesondere ist eine Spitze des speziellen Schiebemuffenzahns in der synchronisierten Stellung in dem Freiraum aufgenommen. Die Spitze des speziellen Schiebemuffenzahns liegt somit nicht mit ihrem Ende in axialer Schieberichtung gesehen an einem der Kupplungszähne an, insbesondere dem jeweiligen Anschlagsanschnitt. Hierdurch ist gewährleistet, dass die spitz zulaufend ausgebildete Spitze des speziellen Schiebemuffenzahns nicht beschädigt wird, da die Spitze aufgrund der geringeren Materialbreite die empfindlichste Stelle des speziellen Schiebemuffenzahns ist. Beispielsweise lässt sich der spezielle Schiebemuffenzahn so aus einem günstigeren Material herstellen bzw. muss die Spitze nicht extra nachbearbeitet werden, um sie belastbarer zu machen. Entsprechend können die Herstellungs- und Fertigungskosten reduziert werden.

Gemäß einer bevorzugten Ausführungsform sind die beiden Anschlagsabschnitte in Bezug auf die axiale Schieberichtung derart orientiert, dass die Anschlagsabschnitte einen Trichter ausbilden, der in den in axialer Schieberichtung durchgehenden Freiraum mündet. Wie bereits erläutert, sind die beiden Anschlagsabschnitte der benachbarten Kupplungszähne jeweils schräg verlaufend in Bezug auf die axiale Schieberichtung ausgebildet, wobei sie aufeinander zulaufen. Hierdurch wird der Trichter durch die beiden Anschlagsabschnitte gebildet, der in den Freiraum mündet, was bedeutet, dass bei der Synchronisation der spezielle Schiebemuffenzahn durch die trichterförmig angeordneten Anschlagsabschnitte der benachbarten Kupplungszähne in die gewünschte Position bewegt wird. Hierdurch ist eine verschleißarme und sichere Synchronisation gewährleistet.

Eine bevorzugte Ausführungsform sieht vor, dass die Schiebemuffe derart ausgebildet ist, dass der Abstand zwischen dem speziellen Schiebemuffenzahn mit den beiden Anlageabschnitten zu einem benachbarten Schiebemuffenzahn derart groß ist, dass in der synchronisierten Stellung zwei Kupplungszähne dazwischen angeordnet sind. Insofern kann der spezielle Schiebemuffenzahn, der gegenüber den übrigen Schiebemuffenzähnen in axialer Schieberichtung gesehen verkürzt sein kann, einen vergrößerten Abstand zum benachbarten Schiebemuffenzahn haben, sodass die Schiebemuffenzahnlücken zwischen dem speziellen Schiebemuffenzahn und seinen benachbarten Schiebemuffenzähnen vergrößert ist.

Ferner kann der spezielle Schiebemuffenzahn einen Basisabschnitt mit einer konstanten Breite haben, von dem ausgehend sich die Breite des speziellen Schiebemuffenzahns in Richtung des Kupplungskörpers verringert. Alternativ oder ergänzend kann der spezielle Kupplungszahn einen Basisabschnitt mit einer konstanten Breite haben, von dem ausgehend sich die Breite des speziellen Kupplungszahns in Richtung der Schiebemuffe verringert. Im Gegensatz hierzu können die übrigen Schiebemuffenzähne und/oder die übrigen Kupplungszähne eine variierende Breite aufweisen. Die Breite der übrigen Schiebemuffenzähne und/oder der übrigen Kupplungszähne nimmt ausgehend von einem Ende in Richtung des Kupplungskörpers bzw. der Schiebemuffe zunächst zu, wobei die Breite dann im Bereich der Anlageabschnitte bzw. Anschlagsabschnitte wieder abnimmt. Insofern weisen bzw. weist der spezielle Schiebemuffenzahn und/oder der spezielle Kupplungszahn eine grundsätzlich andere Form als die übrigen Schiebemuffenzähne und/oder der übrigen Kupplungszähne auf.

Wie bereits erläutert sind die beiden Anschlagsabschnitte des speziellen Kupplungszahns zwei benachbarten Schiebemuffenzähnen zugeordnet. Insofern liegen zwei Schiebemuffenzähne, die jeweils einen Anlageabschnitt aufweisen, an den Anschlagsabschnitten des speziellen Kupplungszahns an, um den mechanischen Schaltanschlag für die Schiebemuffe auszubilden. Die Anlageabschnitte der beiden benachbarten Schiebemuffenzähne sind zueinander gewandt, sodass sie sich in einer zur axialen Schieberichtung senkrechten Richtung gegenüberliegen.

Gemäß einer bevorzugten Ausführungsform sind bzw. ist zumindest der Kupplungskörper und/oder die Schiebemuffe aus einem, insbesondere gesinterten, Pulvermaterial gebildet, vollzerspant hergestellt worden, teilzerspant hergestellt worden oder ein Umformbauteil. Insofern kann der Kupplungskörper bzw. die Schiebemuffe in einfacher Weise aus einem Pulvermaterial hergestellt worden sein. Es kann sich also um einen pulvermetallurgisch hergestellten Kupplungskörper sowie eine pulvermetallurgisch hergestellte Schiebemuffe handeln.

Alternativ kann der Kupplungskörper umgeformt worden sein, um die entsprechende Geometrie aufzuweisen. Dies gilt in analoger Weise für die Schiebemuffe.

Ferner kann ein Rohling zunächst umgeformt und anschließend zerspant worden sein.

Grundsätzlich kann die Synchronisationsvorrichtung zudem einen Synchronring und/oder eine Nabe aufweisen, die drehfest auf einer Getriebewelle sitzt und sich in Umfangsrichtung um eine Drehachse dreht. Insofern ist die Synchronisationsvorrichtung vom Aufbau her eine typische Synchronisationsvorrichtung, die die entsprechenden Bauteile aufweist. Lediglich der mechanische Anschlag für die Schiebemuffe ist durch den Kupplungskörper selbst ausgebildet, insbesondere die Außenverzahnung des Kupplungskörpers.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine schematische Darstellung einer erfindungsgemäßen Synchronisationsvorrichtung,
- Figur 2 eine Detailansicht der Verzahnungen einer nicht beanspruchten Variante einer Synchronisationsvorrichtung,
- Figur 3 eine Detailansicht der Verzahnungen einer nicht beanspruchten Variante einer Synchronisationsvorrichtung,
- Figur 4 eine Detailansicht der Verzahnungen der erfindungsgemäßen Synchronisationsvorrichtung gemäß einer ersten Ausführungsform,
- Figur 5 eine Detailansicht der Verzahnungen der erfindungsgemäßen Synchronisationsvorrichtung gemäß einer zweiten Ausführungsform,
- Figur 6 eine Detailansicht der Verzahnungen der erfindungsgemäßen Synchronisationsvorrichtung gemäß einer dritten Ausführungsform,
- Figur 7 eine Detailansicht der Verzahnungen einer nicht beanspruchten Variante einer Synchronisationsvorrichtung,
- Figur 8 eine Detailansicht der Verzahnungen der erfindungsgemäßen Synchronisationsvorrichtung gemäß einer vierten Ausführungsform,
- Figur 9 eine Detailansicht der Verzahnungen der erfindungsgemäßen Synchronisationsvorrichtung gemäß einer fünften Ausführungsform,
- Figur 10 eine Detailansicht der Verzahnungen einer nicht beanspruchten Variante einer Synchronisationsvorrichtung,
- Figur 11 eine Detailansicht der Verzahnungen der erfindungsgemäßen Synchronisationsvorrichtung gemäß einer sechsten Ausführungsform,
- Figur 12 eine Detailansicht der Verzahnungen der erfindungsgemäßen Synchronisationsvorrichtung gemäß einer siebten Ausführungsform,
- Figur 13 eine Detailansicht der Verzahnungen der erfindungsgemäßen Synchronisationsvorrichtung gemäß einer achten Ausführungsform,
- Figur 14 eine Detailansicht der Verzahnungen einer nicht beanspruchten Variante einer Synchronisationsvorrichtung, und
- Figur 15 eine Detailansicht der Verzahnungen der erfindungsgemäßen Synchronisationsvorrichtung gemäß einer neunten Ausführungsform.

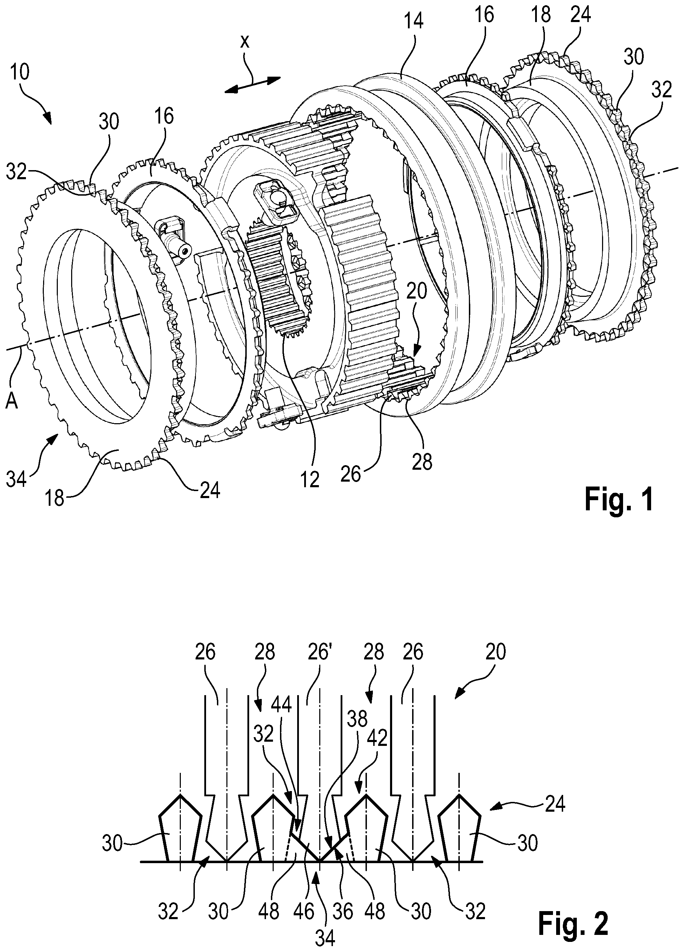

In Figur 1 ist eine Synchronisationsvorrichtung 10 in einer Explosionsansicht gezeigt, die bei einem Schaltgetriebe eines Kraftfahrzeugs verwendet wird.

Die Synchronisationsvorrichtung 10 umfasst in der gezeigten Ausführungsform eine scheibenförmige Nabe 12, die drehfest auf einer hier nicht dargestellten Getriebewelle sitzt und sich in Umfangsrichtung um eine Drehachse A dreht.

Die Synchronisationsvorrichtung 10 weist in der gezeigten Ausführungsform zudem eine im Wesentlichen ringförmige Schiebemuffe 14 auf, die in einer axialen Schieberichtung X verschiebbar angeordnet und drehfest mit der Nabe 12 gekoppelt ist. Wie aus Figur 1 hervorgeht, verläuft die axiale Schieberichtung X parallel zur Drehachse A. Da die Schiebemuffe 14 ringförmig ausgebildet ist und die Nabe 12 umgibt, fällt die axiale Schieberichtung X und die Drehachse A zusammen.

Ferner weist die Synchronisationsvorrichtung 10 in der gezeigten Ausführungsform einen ersten Synchronring 16 sowie einen zweiten Synchronring 16 auf, die jeweils einem Kupplungskörper 18 zugeordnet sind. Die Synchronringe 16 sind jeweils, in axialer Schieberichtung X gesehen, vor dem zugeordneten Kupplungskörper 18 angeordnet.

Die Kupplungskörper 18 können als Teil eines hier nicht dargestellten Gangrads ausgebildet sein, welches geschaltet werden kann, nachdem die Drehbewegung des Kupplungskörpers 18 und die der Nabe durch die Synchronisationsvorrichtung 10 synchronisiert worden sind. Alternativ können die Kupplungskörper 18 separat zum jeweiligen Gangrad ausgebildet sein, wobei eine Verbindung zwischen dem Kupplungskörper 18 und dem Gangrad vorliegt.

Zur Synchronisierung der Drehbewegungen ist der Synchronring 16 vorgesehen, über den deine Reibverbindung zwischen der Nabe 12 und dem Kupplungskörper 18 bzw. dem entsprechenden Gangrad hergestellt werden kann. Der Synchronring 16 kann hierzu in bekannter Weise ausgebildet sein.

Aus Figur 1 wird deutlich, dass die Schiebemuffe 14 eine Innenverzahnung 20 aufweist, die mit einer Außenverzahnung 22 der Nabe 12 sowie mit einer Außenverzahnung 24 der Kupplungskörper 18 zusammenwirken kann, sofern die Schiebemuffe 14 in die jeweilige synchronisierte Stellung überführt wird.

Die Innenverzahnung 20 weist eine Vielzahl von Schiebemuffenzähnen 26 sowie dazwischenliegende Schiebemuffenzahnlücken 28 auf. Insofern wechseln sich in Umfangsrichtung der Schiebemuffe 14 die Schiebemuffenzähne 26 und die Schiebemuffenzahnlücken 28 entsprechend ab.

Die Außenverzahnung 24 des Kupplungskörpers 18 umfasst ebenfalls eine Vielzahl von Kupplungszähnen 30 sowie dazwischenliegenden Kupplungszahnlücken 32. Mit anderen Worten wechseln sich in Umfangsrichtung des Kupplungskörpers 18 die Kupplungszähne 30 und die Kupplungszahnlücken 32 ab.

Wie bereits erläutert, lässt sich die Schiebemuffe 14 über eine hier nicht dargestellte Schaltgabel in der axialen Schieberichtung X relativ zur Nabe 12 und relativ zum Kupplungskörper 18 in axialer Richtung verstellen, um die Drehbewegung der Nabe 12 mit der Drehbewegung des jeweiligen Kupplungskörpers 18 zu synchronisieren und zu koppeln, also drehfest über die Schiebemuffe 14 zu koppeln.

In der synchronisierten Stellung der Synchronisationsvorrichtung 10 liegen dann die Schiebemuffenzähne 26 zumindest teilweise in den Kupplungszahnlücken 32. Ebenfalls liegen in der synchronisierten Stellung der Synchronisationsvorrichtung 10 die Kupplungszähne 30 zumindest teilweise in den Schiebemuffenzahnlücken 28. Hierdurch ist gewährleistet, dass eine drehfeste Kopplung zwischen der Schiebemuffe 14 und dem jeweiligen Kupplungskörper 18 ausgebildet ist.

Darüber hinaus umfasst die Synchronisationsvorrichtung 10 einen mechanischen Schaltanschlag 34 für die Schiebemuffe 14, der durch den Kupplungskörper 18 ausgebildet ist.

Der mechanische Schaltanschlag 34 stellt sicher, dass eine weitere Bewegung der Schiebemuffe 14 in Bezug auf den Kupplungskörper 18 über die synchronisierte Stellung hinaus in der axialen Schieberichtung X verhindert ist, da die Schiebemuffe 14 an den Kupplungskörper 18 anschlägt, wodurch die axiale Bewegung der Schiebemuffe 14 entsprechend begrenzt ist.

In den Figuren 2 bis 9 sind die Innenverzahnung 20 der Schiebemuffe 14 sowie die Außenverzahnung 24 des Kupplungskörpers 18 für unterschiedliche Varianten und Ausführungsformen in einer synchronisierten Stellung der Synchronisationsvorrichtung 10 detaillierter gezeigt, worauf nachfolgend Bezug genommen wird.

Hieraus wird die Ausbildung des mechanischen Schaltanschlags 34 deutlich, der in dem Kupplungskörper 18 integriert ist.

Es kann zumindest einer der Schiebemuffenzähne 26 als ein spezieller Schiebemuffenzahn 26` ausgebildet sein, der gegenüber den übrigen Schiebemuffenzähnen 26 in axialer Schieberichtung (X) gesehen verkürzt ist.

Grundsätzlich weist zumindest der spezielle Schiebemuffenzahn 26`, sofern vorhanden, zwei Anlageabschnitte 36 auf, die an entgegengesetzten Seiten des speziellen Schiebemuffenzahns 26` vorgesehen sind.

Alternativ oder ergänzend kann wenigstens einer der Kupplungszähne 30 als ein spezieller Kupplungszahn 30` ausgebildet sein, der gegenüber den übrigen Kupplungszähnen 30 in axialer Schieberichtung (X) gesehen verkürzt sein kann.

Grundsätzlich weist zumindest der spezielle Kupplungszahn 30`, sofern vorhanden, zwei Anschlagsabschnitte 38 auf, die an entgegengesetzten Seiten des speziellen Kupplungszahns 30` vorgesehen sind .

Grundsätzlich sind in der jeweiligen synchronisierten Stellung dem speziellen Schiebemuffenzahn 26` zwei benachbarte Kupplungszähne 30 zugeordnet, die jeweils einen Anschlagsabschnitt 38 aufweisen, welche mit den beiden Anlageabschnitten 36 zusammenwirken.

Ebenso sind in der jeweiligen synchronisierten Stellung dem speziellen Kupplungszahn 30` zwei benachbarte Schiebemuffenzähne 26 zugeordnet, die jeweils einen Anlageabschnitt 36 aufweisen, welche mit den beiden Anschlagsabschnitten 38 zusammenwirken.

Die Anlageabschnitte 36 sowie die Anschlagsabschnitte 38 liegen in der synchronisierten Stellung der Synchronisationsvorrichtung 10 aneinander an, um den mechanischen Schaltanschlag 34 für die Schiebemuffe 14 in der axialen Schieberichtung X auszubilden, wie nachfolgend anhand der verschiedenen Varianten und Ausführungsformen gemäß der Figuren 2 bis 9 erläutert wird.

Es kann dabei vorgesehen sein, dass die Anlageabschnitte 36 und/oder die Anschlagsabschnitte 38 in Bezug auf die axiale Schieberichtung X schräg verlaufend ausgebildet sind. Dies bedeutet, dass die Anlageabschnitte 36 und/oder die Anschlagsabschnitte 38 jeweils einen Winkel zwischen 20° und 70° zur axialen Schieberichtung X aufweisen können, insbesondere zwischen 125°/2, also 62,5°, und 80°/2, also 40°. Grundsätzlich ergibt sich der Winkel aus der Sperrbedingung, also dem Reibwert und der Geometrie, beispielsweise dem Konuswinkel. Ferner sind grundsätzliche die die Anlageabschnitte 36 und die Anschlagsabschnitte 38 entsprechend korrespondierend zueinander ausgebildet.

Beispielsweise beträgt der Winkel 45°, sodass die Anlageabschnitte 36 und die Anschlagsabschnitte 38 den gleichen Winkel in Bezug auf die axiale Schieberichtung X haben können. Hierdurch ergibt sich eine einfache und folglich kostengünstige Herstellung der Komponenten der Synchronisierungsvorrichtung 10.

Aus Figur 2, die eine nicht beanspruchte Variante der Verzahnungen 20, 24 zeigt, geht hervor, dass zwei benachbarte Kupplungszähne 30 jeweils einen Anschlagsabschnitt 38 aufweisen, wobei die beiden Anschlagsabschnitte 38 zueinander gewandt sind. Mit anderen Worten liegen sich die beiden Anschlagsabschnitte 38 (im Wesentlichen) gegenüber.

Die beiden Anschlagsabschnitte 38 sind dabei einem speziellen Schiebemuffenzahn 26` zugeordnet, sodass der spezielle Schiebemuffenzahn 26` mit zwei Kupplungszähnen 30 zusammenwirkt, insbesondere über die entsprechenden Anschlagsabschnitte 38 der Kupplungszähne 30.

Der spezielle Schiebemuffenzahn 26` weist demnach zwei Anlageabschnitte 36 auf, die an entgegengesetzten Seiten des speziellen Schiebemuffenzahns 26` vorgesehen sind.

Des Weiteren geht aus Figur 2 hervor, dass die beiden Anschlagsabschnitte 38 einen gemeinsamen, durchgehend ausgebildeten Anschlagsbereich 40 ausbilden, da die beiden Kupplungszähne 30 miteinander verbunden sind bzw. die beiden Anschlagsabschnitte 38 miteinander verbunden sind. Die beiden Anschlagsabschnitte 38 gehen dabei ineinander über, sodass ein einstückig ausgebildeter Schaltanschlag 34 für den speziellen Schiebemuffenzahn 26` vorliegt.

Die beiden Anschlagsabschnitte 38 sind dabei in Bezug auf die axiale Schieberichtung X derart orientiert, dass die Anschlagsabschnitte 38 einen Trichter 42 ausbilden, der einen Aufnahmebereich 44 für eine Spitze 46 des speziellen Schiebemuffenzahns 26` bildet.

Die Anlageabschnitte 36 des speziellen Schiebemuffenzahns 26` sind dabei im Bereich der Spitze 46 ausgebildet.

Der Trichter 42 ist, in axialer Schieberichtung X gesehen, trichterförmig ausgebildet. Dies bedeutet, dass die beiden Anschlagsabschnitte 38, die den Trichter 32 bilden, zusammenlaufen und die beiden Anlageabschnitte 36 des speziellen Schiebemuffenzahns 26` kontaktieren.

Die beiden benachbarten Kupplungszähne 30 weisen an den ihren zugewandten Seiten jeweils einen zusätzlichen Seitenbereich 48 auf, an dem der entsprechende Anschlagsabschnitt 38 vorgesehen ist.

Die Schiebemuffenzähne 26 können in dieser Ausführungsform allesamt gleich ausgebildet sein, sodass jeder Schiebemuffenzahn 26 zwei Anlageabschnitte 36 aufweist, die jeweils im Bereich der jeweiligen Spitze 46 vorgesehen sind.

In einer alternativen Ausgestaltung ist vorgesehen, dass ein spezieller Kupplungszahn 30` zwei Anschlagsabschnitte 38 aufweist, die an entgegengesetzten Seiten des speziellen Kupplungszahns 30` vorgesehen sind. Die beiden Anschlagsabschnitte 38 sind dabei zwei benachbarten Schiebemuffenzähnen 26 zugeordnet, sodass die Schiebemuffenzähne 26 an einem gemeinsamen Kupplungszahn 30 anliegen, nämlich dem speziellen Kupplungszahn 30`.

Mit anderen Worten weisen die beiden benachbarten Schiebemuffenzähne 26 jeweils zumindest einen Anlageabschnitt 36 auf, wobei die beiden Anlageabschnitte 36 in axialer Schieberichtung X gesehen zueinander gewandt sind.

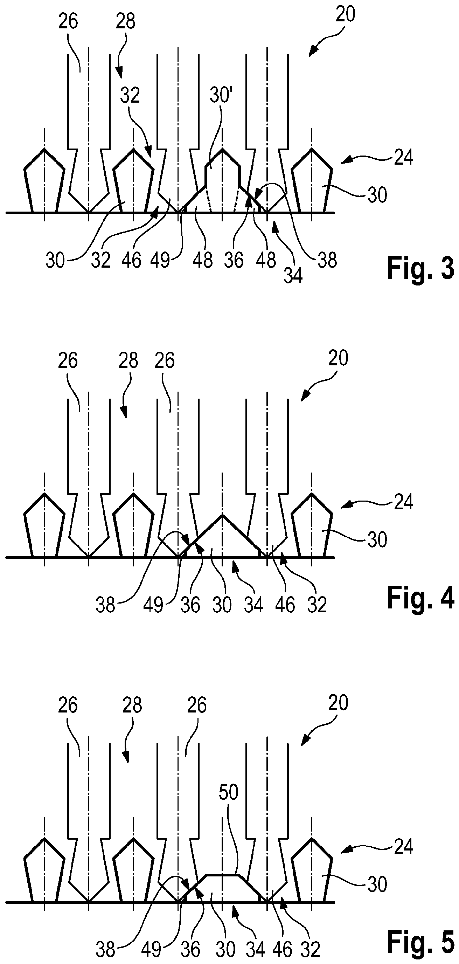

Entsprechende Varianten und Ausführungsformen zu dieser Ausgestaltung sind in Figuren 3 bis 9 gezeigt.

Aus den Figuren 3 bis 9 wird deutlich, dass der spezielle Kupplungszahn 30` von der Form her unterschiedlich zu den übrigen Kupplungszähnen 30 ausgebildet sein kann.

In Figur 3 weist der spezielle Kupplungszahn 30` noch eine grundlegend ähnliche Form wie die übrigen Kupplungszähne 30 auf, wobei an seiner Grundform zwei zusätzliche Seitenbereiche 48 vorgesehen sind, an denen die beiden Anschlagsabschnitte 38 ausgebildet sind.

Der spezielle Kupplungszahn 30` hat einen Basisabschnitt 49 mit einer konstanten Breite, von dem ausgehend sich die Breite des speziellen Kupplungszahns 30` in Richtung der Schiebemuffe 14 in einem ersten Übergangsabschnitt zunächst verringert.

An den ersten Übergangsabschnitt anschließend erstreckt sich ein zweiter Übergangsabschnitt in Richtung der Schiebemuffe 14, wobei sich die Breite des speziellen Kupplungszahns 30` im zweiten Übergangabschnitt nicht verändert bzw. konstant bleibt.

Vom zweiten Übergangabschnitt ausgehend erstreckt sich dann eine spitz zulaufende Spitze zum freien Ende des speziellen Kupplungszahns 30`. Mit anderen Worten verringert sich die Breite des speziellen Kupplungszahns 30` in Richtung der Schiebemuffe 14 wieder.

Generell nimmt die Breite des speziellen Kupplungszahns 30` in Richtung der Schiebemuffe 14 jedoch kontinuierlich ab oder bleibt höchstens konstant, wohingegen die Breite der übrigen Kupplungszähne 30 in Richtung Schiebemuffe 14 zunächst zunimmt.

Grundsätzlich ist der Basisabschnitt an dem zur Spitze bzw. zum Endabschnitt entgegengesetzten Ende vorgesehen.

In Figur 4 ist der spezielle Kupplungszahn 30` als ein im Wesentlichen spitz zulaufender Kupplungszahn 30 ausgebildet, der in Draufsicht dreieckig ausgebildet ist. Insofern schneiden sich die beiden Anschlagsabschnitte 38 in einer gemeinsamen Spitze.

Der spezielle Kupplungszahn 30` weist erneut einen Basisabschnitt 49 mit einer konstanten Breite, von dem ausgehend sich die Breite des speziellen Kupplungszahns 30` in Richtung der Schiebemuffe 14 kontinuierlich (in konstanter Weise) verringert.

In dieser Ausführungsform ist der spezielle Kupplungszahn 30`zudem gegenüber den übrigen Kupplungszähnen 30 in axialer Schieberichtung X gesehen verkürzt.

Insbesondere erstreckt sich der spezielle Kupplungszahn 30` in axialer Schieberichtung X nur bis zu der Ebene, in der die jeweilige Breite der übrigen Kupplungszähne 30 anfängt abzunehmen, also bis zum Umkehrpunkt der übrigen Kupplungszähne 30 in Bezug auf deren Breite.

Im Gegensatz zum spitz zulaufenden speziellen Kupplungszahn 30` in Figur 4 ist in der in Figur 5 gezeigten Ausführungsform vorgesehen, dass die beiden Anschlagsabschnitte 38 in einen gemeinsamen stumpfen Endabschnitt 50 übergehen, der im Wesentlichen senkrecht zur axialen Schieberichtung X verläuft.

Die in Figur 5 gezeigte Ausführungsform entspricht also der in Figur 3 gezeigten Variante, bis auf die weggelassene Spitze und den zweiten Übergangsbereich des speziellen Kupplungszahns 30`.

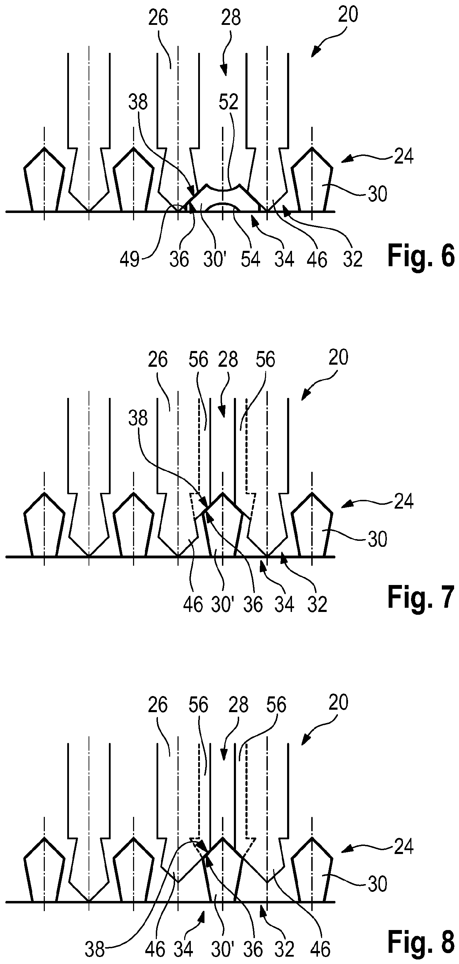

In der in Figur 6 gezeigten Ausführungsform ist die Spitze des speziellen Kupplungszahns 30` ausgespart worden, da eine teilkreisförmige Ausnehmung 52 im Bereich der Mitte des speziellen Kupplungszahns 30` vorgesehen ist. Auf der entgegengesetzten Seite der teilkreisförmigen Ausnehmung 52 ist ein teilkreisförmiger Ausschnitt 54 vorgesehen, also im Basisabschnitt 49.

In der Variante gemäß der Figur 7 und der Ausführungsform gemäß der Figur 8 ist der spezielle Kupplungszahn 30` in analoger Weise zu den anderen Kupplungszähnen 30 ausgebildet.

In diesen Ausführungsformen sind jedoch die benachbarten Schiebemuffenzähne 26, die mit dem speziellen Kupplungszahn 30` zusammenwirken, derart ausgebildet, dass ihre Anlageabschnitte 36 mit den Anschlagsabschnitten 38 des speziellen Kupplungszahns 30` zusammenwirken.

Der spezielle Kupplungszahn 30` weist also an entgegengesetzten Seiten jeweils einen Anschlagsabschnitt 38 auf.

In den Figuren 7 und 8 sind die benachbarten Schiebemuffenzähne 26, die mit dem speziellen Kupplungszahn 30` zusammenwirken, also unterschiedlich zu den anderen Schiebemuffenzähnen 26 ausgebildet.

In Figur 7 weisen die benachbarten Schiebemuffenzähne 26 eine zusätzliche seitliche Verdickung 56 auf, die an zugewandten Seiten der beiden benachbarten Schiebemuffenzähne 26 vorgesehen sind. An diesen Verdickungen 56 sind die Anlageabschnitte 36 vorgesehen.

Insofern handelt es sich bei den beiden benachbarten Schiebemuffenzähne 26 um besondere Schiebemuffenzähne 26, da diese anders ausgebildet sind als die übrigen Schiebemuffenzähne 26.

In der Ausführungsform der Figur 8 sind zusätzlich zur Variante nach Figur 7 noch die entsprechenden Spitzen 46 der benachbarten Schiebemuffenzähne 26 in axialer Schieberichtung X verkürzt ausgebildet.

Grundsätzlich wirkt der spezielle Kupplungszahn 30` mit den beiden besonderen Schiebemuffenzähnen 26 zusammen, insbesondere deren Verdickungen 56, da an diesen die Anlageabschnitte 36 vorgesehen sind.

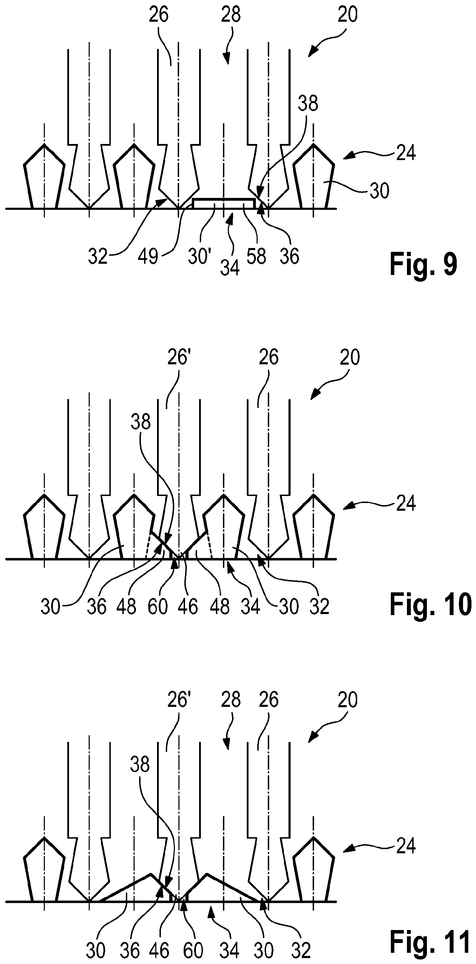

In der in Figur 9 gezeigten Ausführungsform ist der spezielle Kupplungszahn 30` nur noch als ein (rechteckiger) Stumpf 58 ausgebildet, an dem die beiden Schiebemuffenzähne 26 über ihre jeweiligen Anlageabschnitte 36 anliegen. Der spezielle Kupplungszahn 30` ist nur durch seinen Basisabschnitt 49 ausgebildet. Die Anschlagsabschnitte 38 sind an den Ecken des Stumpfs 58 bzw. des speziellen Kupplungszahns 30` ausgebildet.

Auch in dieser Ausführungsform ist der spezielle Kupplungszahn 30` gegenüber den übrigen Kupplungszähnen 30 in axialer Schieberichtung X gesehen verkürzt.

Aus den Figuren 3 bis 6 und 9 wird deutlich, dass die Schiebemuffenzähne 26 allesamt gleich ausgebildet sein können.

In den Varianten und Ausführungsformen gemäß der Figuren 10 bis 15 ist dagegen vorgesehen, dass im Gegensatz zu der in Figur 2 dargestellten Variante die beiden Anschlagsabschnitte 38 der benachbarten Kupplungszähne 30 nicht zusammen den durchgehend ausgebildeten Anschlagsbereich 40 ausbilden, sondern einen Freiraum 60 bereitstellen, der in axialer Schieberichtung X durchgehend ist.

Wie aus den Figuren 10 bis 15 hervorgeht, kann die Spitze 46 des speziellen Schiebemuffenzahns 26` in der synchronisierten Stellung der Synchronisationsvorrichtung 10 in dem Freiraum 60 aufgenommen sein, sodass die Spitze 46, die den Endpunkt in der axialen Schieberichtung X des speziellen Schiebemuffenzahns 26` darstellt, nicht mit einem der Kupplungszähne 30 in Kontakt kommt.

Der mechanische Schaltanschlag 34 ist demnach ausschließlich über die Anlageabschnitte 36 bzw. die Anschlagsabschnitte 38 ausgebildet.

Ferner geht aus den Figuren 10 bis 15 hervor, dass die Anschlagsabschnitte 38 wiederrum den Trichter 42 ausbilden, der nunmehr in den in der axialen Schieberichtung X durchgehenden Freiraum 60 mündet, um die Spitze 46 des speziellen Schiebemuffenzahns 26` aufzunehmen.

Die in Figur 10 gezeigte Variante entspricht derjenigen der Figur 2, wobei der Anschlagsbereich 40 entsprechend zumindest teilweise ausgespart ist, um den Freiraum 60 zu bilden.

Die beiden benachbarten Kupplungszähne 30 weisen an den ihren zugewandten Seiten jeweils einen zusätzlichen Seitenbereich 48 auf, an dem der entsprechende Anschlagsabschnitt 38 vorgesehen ist.

In der in Figur 11 gezeigten Ausführungsform sind die beiden benachbarten Kupplungszähne 30 in axialer Schieberichtung X gesehen verkürzt ausgebildet, insbesondere ohne Spitze.

In der Variante gemäß der Figur 10 und der Ausführungsform gemäß der Figur 11 unterscheiden sich die benachbarten Kupplungszähne 30 von den übrigen Kupplungszähnen 30, wie aus den Figuren 10 und 11 deutlich wird. Die Schiebemuffenzähne 26 sind jeweils gleich ausgebildet.

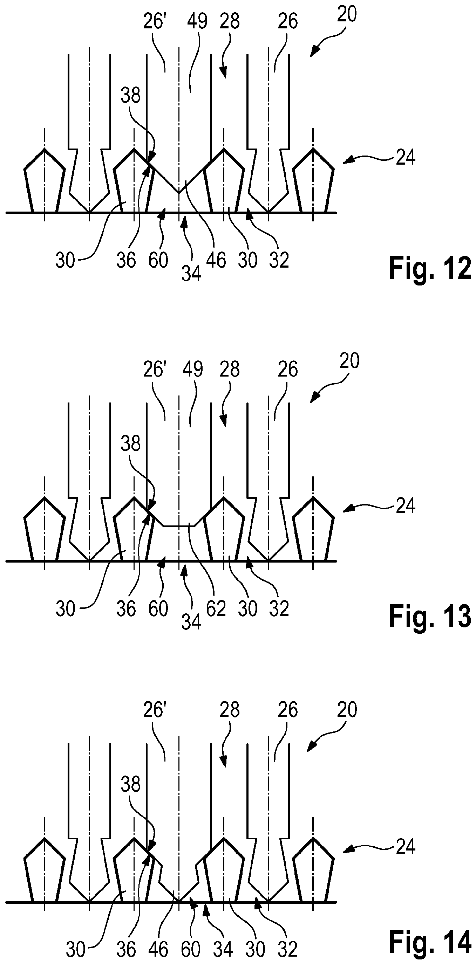

Die Ausführungsform gemäß der Figuren 12 und 13 unterscheiden sich von der in den Figuren 10 und 11 gezeigten Variante bzw. Ausführungsform dahingehend, dass der spezielle Schiebemuffenzahn 26` anders ausgebildet ist, da dieser unterschiedlich zu den übrigen Schiebemuffenzähnen 26 ausgebildet ist. Ferner sind die Kupplungszähne 30 allesamt gleich ausgebildet.

In der in Figur 12 gezeigten Ausführungsform ist der spezielle Schiebemuffenzahn 26` gegenüber den übrigen Schiebemuffenzähnen 26 verbreitert, wobei der spezielle Schiebemuffenzahn 26' eine verkürzte Spitze 46 aufweist.

Der spezielle Schiebemuffenzahn 26` hat dabei einen Basisabschnitt 49 mit einer konstanten Breite, von dem ausgehend sich die Breite des speziellen Schiebemuffenzahns 26` in Richtung des Kupplungskörpers 18 bzw. zur Spitze 46 hin verringert.

Die Breite des speziellen Schiebemuffenzahns 26`, insbesondere die des Basisabschnitts 49, ist dabei breiter als die Kupplungszahnlücken 32. Demnach kann der spezielle Schiebemuffenzahn 26` schon aufgrund seiner Breite nicht zwischen zwei Kupplungszähne 30 eingefahren werden.

In der in Figur 12 gezeigten Ausführungsform läuft der spezielle Schiebemuffenzahn 26` spitz zusammen.

Im Gegensatz hierzu weist der entsprechende Schiebemuffenzahn 26 in der in Figur 13 gezeigten Ausführungsform einen stumpfen Endabschnitt 62 auf, in den die beiden Anlageabschnitte 36 übergehen. Der stumpfe Endabschnitt 62 ist im Wesentlichen senkrecht zur axialen Schieberichtung X orientiert.

Mit anderen Worten ist in Figur 12 demnach gezeigt, dass die beiden Anlageabschnitte 36 in der verkürzten Spitze 46 direkt ineinander übergehen.

In den beiden Ausführungsformen der Figuren 12 und 13 ist der spezielle Schiebemuffenzahn 26` gegenüber den übrigen Schiebemuffenzähnen 26 in axialer Schieberichtung X gesehen verkürzt.

In der in Figur 14 gezeigten Variante ist der spezielle Schiebemuffenzahn 26` ebenfalls unterschiedlich gegenüber den übrigen Schiebemuffenzähnen 26 ausgebildet, wobei dieser sich von den übrigen Schiebemuffenzähnen 26 lediglich dahingehend unterscheidet, dass sein Grundkörper breiter ausgebildet ist, wodurch sich die Anlageabschnitte 36 ergeben.

Die Breite des speziellen Schiebemuffenzahns 26' ist dabei breiter als die Kupplungszahnlücken 32.

Die Spitze 46 des speziellen Schiebemuffenzahns 26` ist in analoger Weise zu den übrigen Schiebemuffenzähnen 26 ausgebildet.

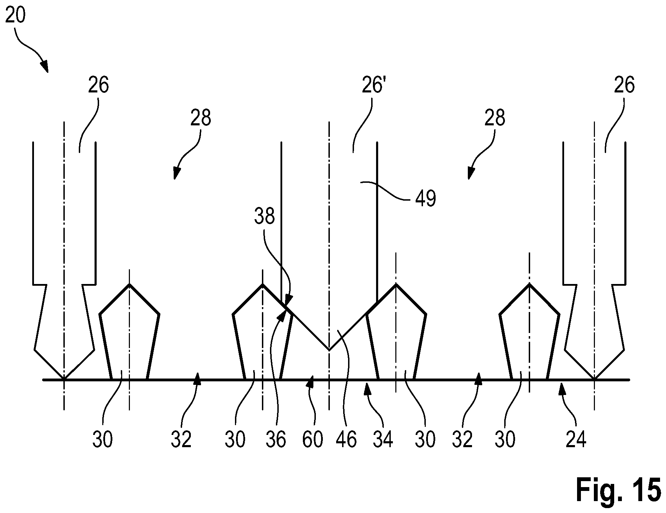

Die in Figur 15 gezeigte Ausführungsform basiert auf der in Figur 12 gezeigten Ausführungsform.

Die Schiebemuffe 14 ist dabei aber derart ausgebildet, dass der Abstand zwischen dem speziellen Schiebemuffenzahn 26` zu einem benachbarten Schiebemuffenzahn 26 derart groß ist, dass in der synchronisierten Stellung zwei Kupplungszähne 30 dazwischen angeordnet sind. Es liegt also eine größere Schiebemuffenzahnlücke 28 zwischen dem speziellen Schiebemuffenzahn 26` und den benachbarten Schiebemuffenzähnen 26 vor.

Generell lässt sich somit eine einfach und kostengünstige Synchronisationsvorrichtung 10 bereitstellen, da der mechanische Schaltanschlag 34 für die Schiebemuffe 12 im Kupplungskörper 18 integriert ist, wodurch auf zusätzliche Bauteile verzichtet werden kann.

## Patentansprüche

1. Synchronisationsvorrichtung (10) für ein Schaltgetriebe eines Kraftfahrzeugs, mit einer Schiebemuffe (14) und wenigstens einem Kupplungskörper (18), wobei die Schiebemuffe eine Innenverzahnung (20) mit einer Vielzahl von Schiebemuffenzähnen (26) und dazwischenliegenden Schiebemuffenzahnlücken (28) umfasst, wobei der Kupplungskörper (18) eine Außenverzahnung (24) mit einer Vielzahl von Kupplungszähnen (30) und dazwischenliegenden Kupplungszahnlücken (32) umfasst, wobei die Schiebemuffe (14) und der Kupplungskörper (18) in axialer Schieberichtung (X) relativ zueinander verstellbar sind, und wobei in einer synchronisierten Stellung der Synchronisationsvorrichtung (10) die Schiebemuffenzähne (26) zumindest teilweise in den Kupplungszahnlücken (32) und die Kupplungszähne (30) zumindest teilweise in den Schiebemuffenzahnlücken (28) liegen,
wobei zwei benachbarte Schiebemuffenzähne (26) jeweils einen Anlageabschnitt (36) aufweisen, die beide einem speziellen Kupplungszahn (30') zugeordnet sind, der zwei Anschlagsabschnitte (38) aufweist, die an entgegengesetzten Seiten des speziellen Kupplungszahns (30') vorgesehen sind, und/oder dass zwei benachbarte Kupplungszähne (30) jeweils einen Anschlagsabschnitt (38) aufweisen, die beide einem speziellen Schiebemuffenzahn (26') zugeordnet sind, der zwei Anlageabschnitte (36) aufweist, die an entgegengesetzten Seiten des speziellen Schiebemuffenzahns (26') vorgesehen sind, und
wobei die beiden Anschlagsabschnitte (38) in der synchronisierten Stellung an den beiden Anschlagsabschnitten (38) anliegen, wodurch ein mechanischer Schaltanschlag (34) in der axialen Schieberichtung (X) ausgebildet ist, der eine weitere Bewegung in die axiale Schieberichtung (X) über die synchronisierte Stellung hinaus verhindert,
**dadurch gekennzeichnet, dass**
der spezielle Kupplungszahn (30') gegenüber den übrigen Kupplungszähnen (30) und/oder der spezielle Schiebemuffenzahn (26') gegenüber den übrigen Schiebemuffenzähnen (26) in axialer Schieberichtung (X) gesehen verkürzt sind bzw. ist.

2. Synchronisationsvorrichtung (10) nach Anspruch 1, **dadurch gekennzeichnet, dass** der spezielle Schiebemuffenzahn (26') in Richtung des Kupplungskörpers (18), insbesondere spitz, zulaufend ausgebildet ist und/oder der spezielle Kupplungszahn (30') in Richtung der Schiebemuffe (14), insbesondere spitz, zulaufend ausgebildet ist.

3. Synchronisationsvorrichtung (10) nach Anspruch 1 oder 2, **dadurch gekennzeichnet, dass** die Anlageabschnitte (36) und/oder die Anschlagsabschnitte (38) in Bezug auf die axiale Schieberichtung (X) schräg verlaufend ausgebildet sind, insbesondere jeweils einen Winkel zwischen 20° und 70° zur axialen Schieberichtung (X) aufweisen, beispielsweise einen Winkel von 45°.

4. Synchronisationsvorrichtung (10) nach einem der vorhergehenden Ansprüche, **dadurch gekennzeichnet, dass** ein in axialer Schieberichtung (X) durchgehender Freiraum (60) zwischen den beiden Anschlagsabschnitten (38) der benachbarten Kupplungszähne (30) vorgesehen ist.

5. Synchronisationsvorrichtung (10) nach Anspruch 4, **dadurch gekennzeichnet, dass** eine Spitze (46) des speziellen Schiebemuffenzahns (26') in der synchronisierten Stellung in dem Freiraum (60) aufgenommen ist.

6. Synchronisationsvorrichtung nach Anspruch 4 oder 5, **dadurch gekennzeichnet, dass** die beiden Anschlagsabschnitte (38) in Bezug auf die axiale Schieberichtung (X) derart orientiert sind, dass die Anschlagsabschnitte (38) einen Trichter (42) ausbilden, der in den in axialer Schieberichtung (X) durchgehenden Freiraum (60) mündet.

7. Synchronisationsvorrichtung (10) nach einem der vorhergehenden Ansprüche, **dadurch gekennzeichnet, dass** die Schiebemuffe (14) derart ausgebildet ist, dass der Abstand zwischen dem speziellen Schiebemuffenzahn (26') zu einem benachbarten Schiebemuffenzahn (26) derart groß ist, dass in der synchronisierten Stellung zwei Kupplungszähne (30) dazwischen angeordnet sind.

8. Synchronisationsvorrichtung (10) nach einem der vorhergehenden Ansprüche, **dadurch gekennzeichnet, dass** der spezielle Schiebemuffenzahn (26') einen Basisabschnitt (49) mit einer konstanten Breite hat, von dem ausgehend sich die Breite des speziellen Schiebemuffenzahns (26') in Richtung des Kupplungskörpers (18) verringert und/oder dass der spezielle Kupplungszahn (30') einen Basisabschnitt (49) mit einer konstanten Breite hat, von dem ausgehend sich die Breite des speziellen Kupplungszahns (30') in Richtung der Schiebemuffe (14) verringert.

9. Synchronisationsvorrichtung (10) nach einem der vorhergehenden Ansprüche, **dadurch gekennzeichnet, dass** zumindest der Kupplungskörper (18) und/oder die Schiebemuffe (14) aus einem, insbesondere gesinterten, Pulvermaterial gebildet, vollzerspant hergestellt worden, teilzerspant hergestellt worden oder ein Umformbauteil sind bzw. ist.

10. Synchronisationsvorrichtung (10) nach einem der vorhergehenden Ansprüche, **dadurch gekennzeichnet, dass** die Synchronisationsvorrichtung (10) einen Synchronring (15) und/oder eine Nabe (12) aufweist, die drehfest auf einer Getriebewelle sitzt und sich in Umfangsrichtung um eine Drehachse (A) dreht.

## Claims

1. A synchronization device (10) for a manual transmission of a motor vehicle, comprising a sliding sleeve (14) and at least one clutch body (18), wherein the sliding sleeve comprises an internal toothing (20) having a multitude of sliding sleeve teeth (26) and sliding sleeve tooth gaps (28) located therebetween, wherein the clutch body (18) comprises an external toothing (24) having a multitude of clutch teeth (30) and clutch tooth gaps (32) located therebetween, wherein the sliding sleeve (14) and the clutch body (18) are adjustable relative to each other in the axial sliding direction (X), and wherein, in a synchronized position of the synchronization device (10), the sliding sleeve teeth (26) are positioned at least partially in the clutch tooth gaps (32) and the clutch teeth (30) are positioned at least partially in the sliding sleeve tooth gaps (28),
wherein two neighboring sliding sleeve teeth (26) each include a contact portion (36) both of which are associated with a special clutch tooth (30') that has two stop portions (38) provided on opposite sides of the special clutch tooth (30'), and/or in that two neighboring clutch teeth (30) each include a stop portion (38) both of which are associated with a special sliding sleeve tooth (26') that has two contact portions (36) provided on opposite sides of the special sliding sleeve tooth (26'), and
wherein, in the synchronized position, the two stop portions (38) rest against the two stop portions (38), whereby a mechanical shift stop (34) is formed in the axial sliding direction (X), which prevents a further movement in the axial sliding direction (X) beyond the synchronized position,
**characterized in that**
compared to the other clutch teeth (30), the special clutch tooth (30') is shortened as viewed in the axial sliding direction (X), and/or compared to the other sliding sleeve teeth (26), the special sliding sleeve tooth (26') is shortened as viewed in the axial sliding direction (X).

2. The synchronization device (10) according to claim 1, **characterized in that** the special sliding sleeve tooth (26') is formed tapered, in particular pointed, in the direction of the clutch body (18) and/or the special clutch tooth (30') is formed tapered, in particular pointed, in the direction of the sliding sleeve (14).

3. The synchronization device (10) according to claim 1 or 2, **characterized in that** the contact portions (36) and/or the stop portions (38) are formed to extend obliquely with respect to the axial sliding direction (X), in particular each have an angle of between 20 degrees and 70 degrees in relation to the axial sliding direction (X), for example an angle of 45 degrees.

4. The synchronization device (10) according to any of the preceding claims, **characterized in that** a free space (60) that is continuous in the axial sliding direction (X) is provided between the two stop portions (38) of the neighboring clutch teeth (30).

5. The synchronization device (10) according to claim 4, **characterized in that** in the synchronized position a tip (46) of the special sliding sleeve tooth (26') is received in the free space (60).

6. The synchronization device according to claim 4 or 5, **characterized in that** the two stop portions (38) are oriented with respect to the axial sliding direction (X) such that the stop portions (38) form a funnel (42) which opens into the free space (60) that is continuous in the axial sliding direction (X).

7. The synchronization device (10) according to any of the preceding claims, **characterized in that** the sliding sleeve (14) is configured such that the distance between the special sliding sleeve tooth (26') and a neighboring sliding sleeve tooth (26) is so large that in the synchronized position two clutch teeth (30) are arranged therebetween.

8. The synchronization device (10) according to any of the preceding claims, **characterized in that** the special sliding sleeve tooth (26') has a base portion (49) having a constant width, starting from which the width of the special sliding sleeve tooth (26') decreases towards the clutch body (18) and/or **in that** the special clutch tooth (30') has a base portion (49) having a constant width, starting from which the width of the special clutch tooth (30') decreases towards the sliding sleeve (14).

9. The synchronization device (10) according to any of the preceding claims, **characterized in that** at least the clutch body (18) and/or the sliding sleeve (14) is or are formed from a powder material, in particular a sintered powder material, has or have been manufactured by full material removal, has or have been manufactured by partial material removal, or is or are a reshaped component.

10. The synchronization device (10) according to any of the preceding claims, **characterized in that** the synchronization device (10) includes a synchronizer ring (15) and/or a hub (12) which is seated on a transmission shaft for joint rotation therewith and rotates about an axis of rotation (A) in the circumferential direction.

## Revendications

1. Dispositif de synchronisation (10) pour une boîte de vitesse d'un véhicule automobile, comprenant un baladeur (14) et au moins un corps d'embrayage (18), le baladeur comprenant une denture interne (20) présentant une pluralité de dents de baladeur (26) et d'entredents de baladeur intermédiaires (28), le corps d'embrayage (18) comprenant une denture externe (24) présentant une pluralité de dents d'embrayage (30) et d'entredents d'embrayage intermédiaires (32), le baladeur (14) et le corps d'embrayage (18) étant déplaçables l'un par rapport à l'autre selon un sens de coulissement axial (X), et les dents de baladeur (26) se trouvant au moins en partie dans les entredents d'embrayage (32) et les dents d'embrayage (30) au moins en partie dans les entredents de baladeur (28) lorsque le dispositif de synchronisation (10) est dans une position synchronisée,
deux dents de baladeur adjacentes (26) présentant respectivement un tronçon d'appui (36) qui sont tous les deux associés à une dent d'embrayage spécifique (30') qui présente deux tronçons de butée (38) prévus sur des faces opposées de la dent d'embrayage spécifique (30'), et/ou en ce que deux dents d'embrayage adjacentes (30) présentent respectivement un tronçon de butée (38) qui sont tous les deux associés à une dent de baladeur spécifique (26') qui présente deux tronçons d'appui (36) prévus sur des faces opposées de la dent de baladeur spécifique (26'), et
les deux tronçons de butée (38) étant en appui sur les deux tronçons de butée (38) dans la position synchronisée, une butée de commutation mécanique (34) étant ainsi réalisée dans le sens de coulissement axial (X), laquelle empêche un mouvement supplémentaire dans le sens de coulissement axial (X) au-delà de la position synchronisée,
**caractérisé en ce que**
vue dans le sens de coulissement axial (X), la dent d'embrayage spécifique (30') est plus courte par rapport aux autres dents d'embrayage (30) et/ou la dent de baladeur spécifique (26') est plus courte par rapport aux autres dents de baladeur (26).

2. Dispositif de synchronisation (10) selon la revendication 1, **caractérisé en ce que** la dent de baladeur spécifique (26') est réalisée effilée, en particulier en pointe, en direction du corps d'embrayage (18), et/ou **en ce que** la dent d'embrayage spécifique (30') est réalisée effilée, en particulier en pointe, en direction du baladeur (14).

3. Dispositif de synchronisation (10) selon la revendication 1 ou 2, **caractérisé en ce que** par rapport au sens de coulissement axial (X), les tronçons d'appui (36) et/ou les tronçons de butée (38) sont réalisés de manière à s'étendre en oblique et présentent en particulier chacun un angle compris entre 20° et 70° par rapport au sens de coulissement axial (X), par exemple un angle de 45°.

4. Dispositif de synchronisation (10) selon l'une des revendications précédentes, **caractérisé en ce qu'**un espace (60) continu dans le sens de coulissement axial (X) est prévu entre les deux tronçons de butée (38) des dents d'embrayage adjacentes (30).

5. Dispositif de synchronisation (10) selon la revendication 4, **caractérisé en ce que** dans la position synchronisée, une pointe (46) de la dent de baladeur spécifique (26') est reçue dans l'espace (60).

6. Disposition de synchronisation selon la revendication 4 ou 5, **caractérisé en ce que** par rapport au sens de coulissement axial (X), les deux tronçons de butée (38) sont orientés de telle sorte que les tronçons de butée (38) forment un entonnoir (42) qui débouche dans l'espace (60) continu dans le sens d'écoulement axial (X).

7. Dispositif de synchronisation (10) selon l'une des revendications précédentes, **caractérisé en ce que** le baladeur (14) est réalisé de telle sorte que la distance entre la dent de baladeur spécifique (26') et une dent de baladeur adjacente (26) est dimensionnée de sorte que deux dents d'embrayage (30) sont intercalées dans la position synchronisée.

8. Dispositif de synchronisation (10) selon l'une des revendications précédentes, **caractérisé en ce que** la dent de baladeur spécifique (26') présente un tronçon de base (49) d'une largeur constante, à partir duquel la largeur de la dent de baladeur spécifique (26') diminue en direction du corps d'embrayage (18), et/ou **en ce que** la dent d'embrayage spécifique (30') présente un tronçon de base (49) de largeur constante, à partir duquel la largeur de la dent d'embrayage spécifique (30') diminue en direction du baladeur (14).

9. Dispositif de synchronisation (10) selon l'une des revendications précédentes, **caractérisé en ce qu'**au moins le corps d'embrayage (18) et/ou le baladeur (14) est/sont réalisé(s) en un matériau poudreux, en particulier fritté, a/ont été fabriqué(s) par enlèvement de copeaux complet, fabriqué(s) par enlèvement de copeaux partiel ou est/sont une pièce de formage.

10. Dispositif de synchronisation (10) selon l'une des revendications précédentes, **caractérisé en ce que** le dispositif de synchronisation (10) présente une bague de synchronisation (15) et/ou un moyeu (12) qui est agencé solidaire en rotation sur un arbre de boîtier de vitesses et qui s'étend dans le sens circonférentiel autour d'un axe de rotation (A).
